(19) **Europäisches Patentamt**
**European Patent Office**
**Office européen des brevets**

(11) **EP 2 091 890 B1**

(12) **FASCICULE DE BREVET EUROPEEN**

(45) Date de publication et mention
de la délivrance du brevet:
**03.04.2013 Bulletin 2013/14**

(51) Int Cl.:
*C04B 38/00* (2006.01)          *C04B 35/565* (2006.01)
*B01D 53/94* (2006.01)

(21) Numéro de dépôt: **07871929.1**

(22) Date de dépôt: **13.12.2007**

(86) Numéro de dépôt international:
**PCT/FR2007/052506**

(87) Numéro de publication internationale:
**WO 2008/078046 (03.07.2008 Gazette 2008/27)**

(54) **PROCEDE D'OBTENTION D'UNE STRUCTURE POREUSE A BASE DE CARBURE DE SILICIUM ET STRUCTURE POREUSE OBTENUE**

VERFAHREN ZUR HERSTELLUNG EINER PORÖSEN STRUKTUR AUF BASIS VON SILICIUMCARBID SOWIE HERGESTELLTE PORÖSE STRUCKTUR

METHOD FOR OBTAINING A POROUS STRUCTURE BASED ON SILICON CARBIDE AND OBTAINED POROUS STRUCTURE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.12.2006 FR 0655836**

(43) Date de publication de la demande:
**26.08.2009 Bulletin 2009/35**

(73) Titulaire: **Saint-Gobain Centre de Recherches et d'Etudes Européen**
**92400 Courbevoie (FR)**

(72) Inventeurs:
• **ANDY, Patricia**
  **84300 Les Taillades (FR)**
• **TARDIVAT, Caroline**
  **13090 Aix-en-provence (FR)**
• **MEY, Damien**
  **84300 Cavaillon (FR)**
• **MAROUF, Ahmed**
  **84300 Cavaillon (FR)**

(74) Mandataire: **Lucas, Francois**
**SAINT-GOBAIN RECHERCHE**
**Département Propriété Industrielle**
**39, Quai Lucien Lefranc**
**93300 Aubervilliers (FR)**

(56) Documents cités:
**EP-A1- 1 070 687     EP-A1- 1 142 619**

EP 2 091 890 B1

**Description**

L'invention se rapporte au domaine des structures de traitement des gaz à base de SiC et incorporant une composante catalytique, telles que celles utilisées dans une ligne d'échappement d'un moteur à combustion interne. Typiquement, l'invention se rapporte à des supports pour le traitement de gaz polluants tels que HC, CO ou $NO_x$ par voie catalysée, ou de préférence à des filtres catalytiques permettant l'élimination conjointe des gaz polluants et des suies produites par la combustion d'un carburant dans un moteur diesel ou essence.

Bien que l'invention n'y soit pas limitée, le cas des filtres à particules d'une ligne d'échappement d'un moteur à combustion interne est plus particulièrement décrit dans la suite de la description. De tels filtres catalytiques permettent le traitement des gaz et l'élimination des suies issues d'un moteur diesel et sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes mécaniques et thermo-mécaniques intenses, qui peuvent entraîner des micro-fissurations susceptibles sur la durée d'entraîner une perte sévère des capacités de filtration de l'unité, voire sa désactivation ou sa détérioration complète. Ce phénomène est particulièrement observé sur des filtres monolithiques de grand diamètre, mais également dans une moindre mesure sur des filtres assemblés, c'est-à-dire incorporant une pluralité d'éléments filtrants monolithiques joints entre eux par un ciment.

Le plus souvent, les filtres sont en matière céramique poreuse, par exemple en carbure de silicium SiC.

Des exemples de tels filtres catalytiques et leurs procédés de fabrication sont par exemple décrits dans les demandes de brevets EP 816 065, EP 1 142 619, EP 1 455 923 ou encore WO 2004/090294 et WO 2004/065088, dans lesquels l'homme du métier trouvera si besoin les détails pratiques de la mise en oeuvre et de la fabrication des structures à base de SiC selon l'invention.

En plus du problème de traitement des suies, la transformation des émissions polluantes en phase gazeuse (c'est à dire principalement les oxydes d'azote ($NO_x$) et le monoxyde de carbone (CO), voire les hydrocarbures imbrûlés) en des gaz moins nocifs (tels que l'azote gazeux ($N_2$) ou le dioxyde de carbone ($CO_2$)) nécessite un traitement catalytique supplémentaire.

Pour traiter au cours d'une même étape les polluants gazeux et solides, on a cherché à ajouter une fonction catalytique sur le filtre à particules précédemment décrit. Selon les procédés classiquement utilisés, la structure en nid d'abeille est imprégnée par une solution comprenant le catalyseur ou un précurseur du catalyseur.

De tels procédés comportent en général au moins une étape d'imprégnation par immersion soit dans une solution contenant un précurseur du catalyseur ou le catalyseur solubilisé dans l'eau (ou un autre solvant polaire), soit une suspension dans l'eau de particules catalytiques. Un exemple d'un tel procédé est décrit par le brevet US 5,866,210.

De façon connue, le procédé d'imprégnation peut être conduit en une ou plusieurs étapes. La ou les étapes d'imprégnation visent à déposer de la manière la plus uniforme possible le catalyseur dans la structure.

Le plus souvent le catalyseur comprend un principe actif incluant des métaux précieux (Pt, Pd, Rh) et éventuellement un oxyde de terre rare, par exemple un mélange de platine et d'oxyde de cérium $Pt/CeO_2$. Le principe actif est habituellement déposé, selon des techniques bien connues en catalyse hétérogène, dans la porosité d'un support oxyde à forte surface spécifique, par exemple l'alumine, l'oxyde de titane, la silice, la cérine, l'oxyde de zirconium.

Il est connu par ailleurs que l'introduction d'un filtre à particules tel que précédemment décrit dans la ligne d'échappement du moteur entraîne une perte de pression, souvent appelée perte de charge dans le domaine, susceptible d'altérer les performances du moteur. La porosité du filtre est en conséquence choisie suffisamment élevée pour éviter une telle altération et est comprise en général entre 20 et 75 %.

La perte de charge est cependant d'autant plus importante que le filtre comprend une fonction catalytique. En effet, le dépôt du revêtement catalytique, en particulier du support du catalyseur tel que précédemment décrit, sur les parois et/ou dans la porosité de la structure tend à augmenter encore la perte de charge due à la présence du filtre dans la ligne d'échappement. Du fait de cette limitation, les quantités de catalyseur déposées et par suite l'efficacité du traitement catalytique des gaz d'échappement sont à l'heure actuelle limitées.

Il résulte de ce qui précède qu'un besoin existe d'obtenir une structure filtrante de bonne résistance mécanique et thermomécanique, dont la microstructure (porosité, surface spécifique des pores) puisse permettre le dépôt d'une quantité accrue de catalyseur de façon à augmenter l'efficacité du traitement des gaz, mais sans pour autant conduire à une forte augmentation de la perte de charge occasionnée par l'introduction du filtre dans une conduite d'évacuation des gaz telle qu'une ligne d'échappement.

Une première solution déjà décrite consiste à augmenter la porosité du réseau de grains de carbure de silicium, par la présence dans le mélange initial d'une quantité définie d'un agent porogène, du type résine synthétique tel que de la résine acrylique ou polymère organique tel que l'amidon, tel que décrit dans la demande EP 1 403 231. Cependant l'augmentation de la porosité conduit en parallèle à une diminution sévère des propriétés mécaniques du filtre, ce qui en diminue la tenue en service, en particulier dans une application comme le filtre à particules.

On sait également, par exemple de la demande EP 1 142 619, qu'il est possible d'obtenir des structures en SiC à forte porosité en utilisant, pour la constitution du mélange initial de poudre, deux fractions de grains de $\alpha$-SiC dont les tailles de grains sont différentes, c'est-à-dire typiquement de l'ordre de 10 microns pour la fraction grosse et de 1 micron pour la fraction fine. Par un procédé classique de mise en forme de la structure, comprenant notamment des principales étapes de mélange avec une quantité appropriée d'eau, d'extrusion, de séchage puis de cuisson, il est possible d'obtenir alors une porosité ouverte de l'ordre de 40% et une perte de charge acceptable pour une application dans une ligne d'échappement automobile. La surface spécifique totale développée des pores, mesurée dans de telles structures, est cependant trop faible pour permettre le dépôt d'une quantité suffisante de catalyseur et une efficacité suffisante de traitement des gaz polluants HC, CO et $NO_x$, sans augmenter fortement la perte de charge occasionnée par le filtre catalysé dans la ligne d'échappement.

La demande de brevet EP 1 541 817 propose alternativement de mélanger une fraction grosse de $\alpha$-SiC dont la taille moyenne des particules est comprise entre 10 et 50 microns et une fraction fine de $\beta$-SiC dont la taille moyenne des particules est comprise 0,1 et 1 microns. De même que précédemment, la surface spécifique des pores dans de telles structures est trop faible pour permettre le dépôt d'une quantité suffisante de catalyseur et une efficacité suffisante de traitement des gaz polluants HC, CO et $NO_x$, sans augmenter fortement la perte de charge occasionnée par le filtre catalysé.

La demande de brevet EP 1142619 décrit un procédé de fabrication d'une structure poreuse à partir d'un mélange de deux fractions de $\alpha$-SiC.

La demande de brevet EP 1070687 décrit un procédé d'obtention de structure filtrante à partir de fractions de grains de SiC et d'au moins un oxyde.

Le but de la présente invention est ainsi de fournir un procédé d'obtention d'une structure poreuse dont la teneur en SiC est supérieure à 95%, dont la porosité ouverte est supérieure à 40% et permettant de répondre aux problèmes précédemment exposés, ladite structure présentant plus particulièrement :

- une surface spécifique des pores permettant le dépôt d'une quantité accrue de catalyseur et une efficacité améliorée du traitement catalytique des polluants gazeux du type CO, HC et $NO_x$.
- une faible perte de charge, notamment de manière à limiter la surconsommation en carburant liée à la présence d'une telle structure, utilisée comme système de filtration dans une ligne d'échappement automobile,
- une tenue mécanique suffisante pour résister à des sollicitations mécaniques ou thermomécaniques intenses, liées aux applications envisagées, notamment une utilisation dans une ligne d'échappement automobile.

Dans une forme générale, la présente invention se rapporte à un procédé d'obtention d'une structure faite d'un matériau céramique poreux comprenant au moins 95% de carbure de silicium SiC, ledit procédé étant caractérisé en ce que ladite structure est obtenue à partir d'un mélange de grains de SiC comprenant au moins:

- une première fraction de grains de $\alpha$-SiC dont le diamètre médian est inférieur à 5 microns,
- une deuxième fraction de grains de $\alpha$-SiC dont le diamètre médian est au moins deux fois supérieur à celui de la première fraction de grains de $\alpha$-SiC et dont le diamètre médian est supérieur ou égal à 5 microns, de préférence supérieur ou égal à 10 microns,
- une fraction de grains de $\beta$-SiC ou d'au moins un précurseur de grains de $\beta$-SiC.

Au sens de la présente description, le diamètre médian $d_{50}$ de grains ou de particules constituant une fraction désigne le diamètre des particules au dessous duquel se trouve 50% en masse de la population des grains.

Par exemple, le diamètre médian des grains de la première fraction de grains de $\alpha$-SiC est inférieur à environ 1 micron, de préférence inférieur à 0,8 micron.

Le diamètre médian des grains de la deuxième fraction de grains de $\alpha$-SiC est par exemple compris entre environ 5 et environ 100 microns, de préférence entre environ 10 et environ 20 microns.

Selon l'invention, la fraction de grains de $\beta$-SiC peut présenter un diamètre médian au moins égal à celui de la première fraction de grains de $\alpha$-SiC et de préférence est compris entre environ 3 et environ 30 microns.

La première fraction de grains de α-SiC représente entre 15 et 50% poids du mélange de grains de SiC, de préférence entre 20 et 40% poids du mélange de grains de SiC.

La deuxième fraction de grains de α-SiC représente entre 30 et 80% poids du mélange de grains de SiC, de préférence entre 30 et 60% poids du mélange de grains de SiC.

Selon l'invention, la fraction de grains de β-SiC représente entre 5% et 40% poids du mélange de grains de SiC, de préférence entre 10 et 35% poids du mélange de grains de SiC.

Selon un mode alternatif, le précurseur de grains de β-SiC est choisi dans le groupe constitué par une poudre de Silicium en association avec du carbone amorphe ou du carbone graphite, par un alcoxyde de Silicium en association avec du carbone amorphe ou du carbone graphite, ou un composé organométallique à base de Silicium.

Le procédé d'obtention d'une structure faite d'un matériau céramique poreux comprenant au moins 95% de carbure de silicium SiC, selon l'invention, comprend les étapes suivantes :

- mélange de différentes fractions de grains de SiC, de manière à obtenir un mélange tel que précédemment décrit,
- mise en forme de la structure filtrante, par exemple par extrusion, après malaxage du mélange dans un liquide tel que l'eau,
- séchage, par exemple par chauffage ou sous l'action de micro-ondes,
- cuisson de la structure poreuse mise en forme, sous atmosphère non oxydante à une température comprise entre environ 1450°C et environ 2300°C.

Des modes de réalisations possibles mais non restrictifs du procédé selon l'invention sont donnés ci-après :

Le mélange de poudre initial avant la mise en forme peut comprendre des agents liants temporaires et des plastifiants choisis par exemple parmi la gamme des polysaccharides et dérivés de celluloses, les PVA, les PEG, voire des dérivés de lignones ou des agents de prise chimique tels que l'acide phosphorique ou le silicate de soude dès lors que ceux-ci sont compatibles avec le procédé de cuisson.

Sans que cela soit cependant nécessaire pour la bonne mise en oeuvre des structures selon la présente invention, il est possible d'ajouter au mélange des agents porogènes du type de ceux classiquement utilisés ou décrits dans la littérature, en particulier ceux décrits dans la demande EP 1 403 231.

L'étape de mise en forme du matériau est réalisée de préférence selon l'invention par extrusion mais d'autres procédés ne sont pas exclus par exemple tout procédé connu de pressage, de vibration, de moulage.

Une étape intermédiaire d'élimination des liants (ou déliantage) peut être effectuée de préférence sous air et à une température de préférence inférieure à 700°C de manière à assurer une tenue mécanique suffisante avant l'étape de cuisson ou frittage proprement dite et d'éviter une oxydation du SiC ou des précurseurs du SiC.

La cuisson est, selon l'invention, réalisée à une température supérieure à 1450°C, de préférence supérieure à 1600°C, de manière encore plus préférée supérieure à 1900°C, voire même supérieure à 2100°C mais en général toujours inférieure à 2400°C pour éviter la décomposition du SiC. La cuisson est effectuée sous atmosphère non oxydante, de préférence d'argon Ar, de manière à obtenir au final un matériau présentant une résistance mécanique élevée.

L'invention se rapporte également à une structure poreuse susceptible d'être obtenue par un procédé selon l'une des revendications précédentes.

Par exemple ladite structure comprend une partie centrale incorporant un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

L'invention se rapporte en outre à un filtre ou un support catalytique obtenu à partir de la précédente structure et par dépôt, de préférence par imprégnation, d'au moins une phase catalytique active comprenant typiquement au moins un métal précieux tel que Pt et/ou Rh et/ou Pd et éventuellement un oxyde tel que $CeO_2$, $ZrO_2$, $CeO_2$-$ZrO_2$. Un tel support catalytique peut être utilisé dans une ligne d'échappement d'un moteur diesel ou essence. De même le filtre catalytique précédent peut être utilisé comme filtre à particules dans une ligne d'échappement d'un moteur diesel ou essence.

L'invention et ses avantages seront mieux compris à la lecture des exemples non limitatifs qui suivent. Dans les exemples, tous les pourcentages sont donnés en poids.

**Exemples :**

Dans un malaxeur, on a mélangé différentes poudres de α-SiC, de β-SiC ou de précurseurs de β-SiC dans des proportions en poids données dans le tableau 2.

Par exemple, dans l'exemple 1 selon l'art antérieur, 70% poids d'une poudre de α-SiC dont les grains présentent

un diamètre médian $d_{50}$ de 10 microns, ont été dans un premier temps mélangés avec une deuxième poudre de $\alpha$-SiC dont les grains présentent un diamètre médian $d_{50}$ de 0,5 micron, dans un premier mode comparable au mélange de poudre décrit dans EP 1 142 619. A ce mélange est ajouté un porogène du type polyéthylène dans une proportion égale à 5% poids du poids total des grains de SiC et un additif de mise en forme du type méthylcellulose dans une proportion égale à 10% poids du poids total des grains de SiC, tel que reporté dans le tableau 2.

On ajoute ensuite la quantité d'eau nécessaire et on malaxe jusqu'à obtenir une pâte homogène et dont la plasticité permet l'extrusion à travers une filière d'une structure en nid d'abeille. Dans l'exemple 1, le besoin en eau est par exemple de 22% poids en eau, rapporté au poids total des grains de SiC secs introduits dans le mélange.

Les caractéristiques dimensionnelles des structures obtenues après extrusion, pour tous les exemples, sont données dans le tableau 1 :

Tableau 1

| Géométrie des canaux et du monolithe | carrée |
|---|---|
| Densité de canaux | 180 cpsi (canaux par inch carré, 1 inch = 2,54 cm,) soit 27,9 canaux/cm$^2$ |
| Epaisseur des parois interne | 350 $\mu$m |
| Epaisseur de parois externe moyenne | 600 $\mu$m |
| Longueur | 15.2 cm |
| Largeur | 3,6cm |

On sèche ensuite les monolithes crus obtenus par micro-onde pendant un temps suffisant pour amener la teneur en eau non liée chimiquement à moins de 1 % en masse.

On bouche alternativement les canaux de chaque face du monolithe selon des techniques bien connues, par exemple décrites dans la demande WO 2004/065088.

Le monolithe est ensuite cuit sous air selon une montée en température de 20°C/heure jusqu'à atteindre une température maximale de 2200°C qui est maintenue pendant 6 heures.

Les caractéristiques et propriétés des matériaux et structures filtrantes obtenues selon la méthode précédente ont été évaluées selon les techniques suivantes :

Mesure de la porosité et de la surface spécifique :

Des analyses de porosité par porosimétrie ont été réalisées avec un porosimètre à haute pression de mercure de type Micromeritics 9500 ®.

La surface spécifique développée des pores des différents matériaux poreux a été déterminée par une analyse classique de surface selon la méthode BET. Cette méthode de mesure de surface spécifique par adsorption de gaz inerte a été développée par S. Brunauer, P.H. Emmet et J. Teller et est bien connue de l'homme de la technique.

Mesure de la résistance mécanique :

La force à la rupture est mesurée à température ambiante pour chaque exemple sur 10 unités monolithiques correspondant à des éléments d'un même lot de fabrication de longueur égale à 15,2 cm et largeur égale à 3,6 cm. Le montage en flexion 3 points est réalisé avec une distance de 140 mm entre les deux appuis inférieurs selon la norme ISO5014. La vitesse de descente du poinçon est constante de l'ordre de 10mm/min.

Le module de rupture en flexion MOR a été calculé selon l'égalité suivante:

$$MOR = \frac{F l_e H}{8I}$$

où F (en Newtons) correspond à la force à la rupture, $I_e$ (en mm) correspond à l'entraxe, H (en mm) à la hauteur de la section et I (en mm$^4$) au moment d'inertie. Le moment d'inertie est calculé selon les connaissances de l'homme de la technique en fonction de l'épaisseur de paroi interne et externe et la densité de canaux.

Mesure de la perte de charge :

Par perte de charge, on entend au sens de la présente invention la pression différentielle existant entre l'amont et l'aval du filtre. La perte de charge a été mesurée selon les techniques de l'art, pour un débit d'air de 300 m$^3$/h dans un courant d'air ambiant. La mesure a été effectuée sur un filtre assemblé à partir de 16 éléments tels que décrits dans le tableau 1. Ces éléments, issus d'un même mélange initial, sont assemblés entre eux selon les principes décrits dans WO 2004/065088 par collage au moyen d'un ciment de composition chimique suivante : 72% poids de SiC, 15% poids d'Al$_2$O$_3$, 11 % poids de SiO$_2$, le reste étant constitué par des impuretés majoritairement de Fe$_2$O$_3$ et d'oxydes de métaux alcalins et alcalino-terreux. L'épaisseur moyenne du joint entre deux blocs voisins est de l'ordre de 2 mm. L'ensemble est ensuite usiné, afin de constituer des filtres assemblés de forme cylindrique de diamètre 5,66 pouces soit 14,4 cm environ.

En fonction de différents vecteurs d'introduction du SiC dans le mélange initial, les caractéristiques et propriétés des matériaux évaluées selon les techniques précédemment décrites sont reportées dans le tableau 2 qui suit :

Tableau 2

| Exemple | 1 | 2 | 3 | 4 | 5 | 6 | 7 | 8 | 9 |
|---|---|---|---|---|---|---|---|---|---|
| poudre de alpha SiCd$_{50}$=0,5$\mu$m (%poids) | 30 | 33 | 33 | 33 | 29 | 70 | | | 30 |
| poudre de alpha SiC d$_{50}$=10$\mu$m (%poids) | 70 | 33 | 52 | 52 | 58 | | 85 | 60 | |
| poudre de beta SiC d$_{50}$=12$\mu$m (%poids) | | 34 | | | | 30 | | | 70 |
| poudre de beta SiC d$_{50}$=0,5$\mu$m (%poids) | | | | | | | | 40 | |
| poudre de Si d$_{50}$=15$\mu$m (%poids) | | | 10 | 11 | | | 10 | | |
| précurseur de Si : tétraéthylorthosilicate (%poids) | | | | | 12,2 | | | | |
| poudre de C amorphe d$_{50}$=8$\mu$m (%poids) | | | 5 | 4 | 0,8 | | 5 | | |
| porogène de type polyéthylène d$_{50}$=25$\mu$m | +5%* | +5%* | +5%* | +5%* | +5%* | +5%* | +5%* | +5%* | +5%* |
| additif de mise en forme type méthylcellulose | +10%* | +10%* | +10%* | +10%* | +10%* | +10%* | +10%* | +10%* | +10% |
| besoin en eau | + 22%* | + 22%* | + 25%* | +25%* | +19%* | +22%* | +25%* | +20%* | +20%* |
| PO % (PO = porosité) | 46 | 50,3 | 53,6 | 51,8 | 46,3 | 45 | 54,7 | 45 | 48 |
| MOR (MPa) | 15 | 20 | 17,5 | 22 | 22 | 13 | 8,5 | 17 | 3 |
| surface spécifique m$^2$/g (BET) | 0,05 | 0,5 | 0,4 | 0,4 | 0,3 | 0,7 | 0,4 | 0,1 | 0,5 |
| perte de charge (millibars) | 15 | 16 | 13 | 14 | 18 | 25 | 11 | non mesuré | non mesuré |
| MOR×Surface BET (MPa.m$^2$/g) | 0,8 | 10,0 | 7,0 | 8,8 | 6,6 | 9,1 | 3,4 | 1,7 | 1,5 |
| * ajout en % par rapport au poids total de SiC introduit dans le mélange initial | | | | | | | | | |

Dans les résultats reproduits dans le tableau 2, on a également reporté le produit MOR × Surface spécifique, qui permet de traduire de façon simple et directe l'efficience du compromis entre les propriétés catalytiques attendues du matériau poreux constitutif du filtre par rapport à ses propriétés de résistance mécanique.

Les exemples 2 à 5 sont des exemples de réalisation selon l'invention.

Les exemples 1 et 6 à 9 illustrent des exemples comparatifs donnés à titre purement illustratif pour souligner les avantages de la présente invention.

Plus particulièrement :

La comparaison des résultats des exemples 2 à 4 selon l'invention avec l'exemple 1 selon l'art antérieur montre une augmentation significative de la surface spécifique et une amélioration ou un maintien des caractéristiques mécaniques du matériau, malgré l'augmentation forte du volume de porosité ouverte PO.

Au final, l'amélioration sensible du produit MOR surface spécifique traduit un meilleur compromis entre les propriétés catalytiques et mécaniques attendues du filtre selon l'invention.

Les exemples comparatifs 6 à 9 illustrent des modes dans lesquels une des fractions de SiC selon l'invention manque dans le mélange initial.

Les résultats obtenus selon les exemples 6 et 7 (voir tableau 2) montrent que l'absence d'une des deux fractions de α-SiC ne permet pas l'obtention d'un matériau de résistance mécanique suffisante. En outre le produit MOR×Surface est trop faible dans le cas du matériau obtenu selon l'exemple 7 et la perte de charge trop élevée dans le cas du matériau obtenu selon l'exemple 6.

Le matériau de l'exemple 8, obtenu selon le mode expérimental décrit dans l'exemple 1 de la demande EP 1 541 817, est issu d'une formulation du mélange initial de fractions de SiC dans laquelle la fraction fine de grains de α-SiC est absente et dans laquelle le diamètre médian de la poudre de β-SiC est de 0,5 microns (fines). Les résultats indiquent une résistance mécanique MOR et une surface spécifique nettement inférieures aux valeurs obtenues selon les exemples 2 à 5 selon l'invention.

L'exemple 9 montre qu'un taux de particules grosses de β-SiC ajouté trop élevé pénalise fortement la résistance mécanique et conduit à un compromis MOR × Surface beaucoup trop faible.

Dans la description et les exemples qui précèdent, pour des raisons de simplicité, on a décrit l'invention en relation avec les filtres à particules catalysés permettant l'élimination des polluants gazeux et des suies présents dans les gaz d'échappement en sortie d'une ligne d'échappement d'un moteur diesel.

La présente invention se rapporte cependant également à d'autres structures de traitement de gaz pollués, par exemple à des supports catalytiques pour l'élimination des polluants gazeux placés typiquement en sortie des moteurs essence voire diesel. Dans ce type de structure, les canaux du nid d'abeille ne sont pas obstrués à l'une ou l'autre de leur extrémité. Appliquée à ces supports, la mise en oeuvre de la présente invention présente l'avantage d'augmenter la surface spécifique du support et par suite la quantité de phase active présente dans le support, sans pour autant affecter la résistance mécanique globale du support.

**Revendications**

1. Procédé d'obtention d'une structure faite d'un matériau céramique poreux comprenant au moins 95% de carbure de silicium SiC, comprenant les étapes suivantes :

   - mélange de différentes fractions de grains de SiC, ledit mélange comprenant au moins :

     ■ une première fraction de grains de α-SiC dont le diamètre médian est inférieur à 5 microns, représentant entre 15 et 50% poids du mélange de grains de SiC,
     ■ une deuxième fraction de grains de α-SiC dont le diamètre médian est au moins deux fois supérieur à celui de la première fraction de grains de α-SiC et dont le diamètre médian est supérieur ou égal à 5 microns, représentant entre 30 et 80% poids du mélange de grains de SiC,
     ■ une fraction de grains de β-SiC ou d'au moins un précurseur de grains de β-SiC, représentant entre 5% et 40% poids du mélange de grains de SiC,

   - mise en forme de la structure filtrante, par exemple par extrusion, après malaxage du mélange dans un liquide tel que l'eau,
   - séchage, par exemple par chauffage ou sous l'action de micro-ondes,
   - cuisson de la structure poreuse mise en forme, sous atmosphère non oxydante à une température comprise entre environ 1450°C et environ 2300°C.

2. Procédé selon la revendication 1, dans lequel le diamètre médian des grains de la première fraction de grains de α-SiC est inférieur à environ 1 micron, de préférence inférieur à 0,8 micron.

3. Procédé selon la revendication 1 ou 2, dans lequel le diamètre médian des grains de la deuxième fraction de grains de $\alpha$-SiC est compris entre environ 10 et environ 100 microns, de préférence entre environ 10 et environ 20 microns.

4. Procédé selon l'une des revendications précédentes, dans lequel la fraction de grains de $\beta$-SiC présente un diamètre médian au moins égal à celui de la première fraction de grains de $\alpha$-SiC et de préférence est compris entre environ 3 et environ 30 microns.

5. Procédé selon l'une des revendications précédentes, dans lequel la première fraction de grains de $\alpha$-SiC représente entre 20 et 40% poids du mélange de grains de SiC.

6. Procédé selon l'une des revendications précédentes, dans lequel la deuxième fraction de grains de $\alpha$-SiC représente entre 30 et 60% poids du mélange de grains de SiC.

7. Procédé selon l'une des revendications précédentes, dans lequel la fraction de grains de $\beta$-SiC représente entre 10 et 35% poids du mélange de grains de SiC.

8. Procédé selon l'une des revendications précédentes, dans lequel le précurseur de grains de $\beta$-SiC est choisi dans le groupe constitué par une poudre de Silicium en association avec du carbone amorphe ou du carbone graphite, par un alcoxyde de Silicium en association avec du carbone amorphe ou du carbone graphite, ou un composé organométallique à base de Silicium.

9. Structure poreuse susceptible d'être obtenue par un procédé selon l'une des revendications précédentes.

10. Structure poreuse filtrante selon la revendication 9 dont la partie centrale comprend un élément filtrant en nid d'abeille ou une pluralité d'éléments filtrants en nid d'abeille reliés entre eux par un ciment de joint, le ou lesdits éléments comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant suivant une face d'évacuation des gaz, de telle façon que le gaz traverse les parois poreuses.

11. Filtre ou support catalytique obtenu à partir d'une structure selon l'une des revendications 9 ou 10 par dépôt, de préférence par imprégnation, d'au moins une phase catalytique active comprenant typiquement au moins un métal précieux tel que Pt et/ou Rh et/ou Pd et éventuellement un oxyde tel que $CeO_2$, $ZrO_2$, $CeO_2$-$ZrO_2$.

12. Utilisation d'un support catalytique selon la revendication 11 dans une ligne d'échappement d'un moteur diesel ou essence.

13. Utilisation d'un filtre catalytique selon la revendication 11 comme filtre à particules dans une ligne d'échappement d'un moteur diesel ou essence.

## Claims

1. A process for obtaining a structure made from a porous ceramic material comprising at least 95% of silicon carbide SiC, comprising the following steps:

   - mixing various fractions of SiC grains, the mixture comprising at least:

       - a first fraction of $\alpha$-SiC grains whose median diameter is less than 5 microns and that represents between 15 and 50 wt% of the mixture of SiC grains;
       - a second fraction of $\alpha$-SiC grains whose median diameter is at least two times greater than that of the first fraction of $\alpha$-SiC grains and whose median diameter is greater than or equal to 5 microns and that represents between 30 and 80 wt% of the mixture of SiC grains; and
       - a fraction of $\beta$-SiC grains or of at least a precursor of $\beta$-SiC grains, that represents between 5 and 40 wt% of the mixture of SiC grains,

   - shaping the filtering structure, for example by extrusion, after compounding the mixture in a liquid such as water;
   - drying, for example by heating or under microwave action; and

- firing the shaped porous structure in a nonoxidizing atmosphere at a temperature between around 1450°C and around 2300°C.

2. The process as claimed in claim 1, in which the median diameter of the grains of the first fraction of $\alpha$-SiC grains is less than around 1 micron, preferably less than 0.8 microns.

3. The process as claimed in claim 1 or 2, in which the median diameter of the grains of the second fraction of $\alpha$-SiC grains is between around 10 and around 100 microns, preferably between around 10 and around 20 microns.

4. The process as claimed in one of the preceding claims, in which the fraction of $\beta$-SiC grains has a median diameter at least equal to that of the first fraction of $\alpha$-SiC grains and preferably is between around 3 and around 30 microns.

5. The process as claimed in one of the preceding claims, in which the first fraction of $\alpha$-SiC grains represents between 20 and 40 wt% of the mixture of SiC grains.

6. The process as claimed in one of the preceding claims, in which the second fraction of $\alpha$-SiC grains represents between 30 and 60 wt% of the mixture of SiC grains.

7. The process as claimed in one of the preceding claims, in which the fraction of $\beta$-SiC grains represents between 10 and 35 wt% of the mixture of SiC grains.

8. The process as claimed in one of the preceding claims, in which the precursor of $\beta$-SiC grains is chosen from the group composed of a silicon powder in combination with amorphous carbon or graphite carbon, by a silicon alkoxide in combination with amorphous carbon or graphite carbon, or a silicon-based organometallic compound.

9. A porous structure capable of being obtained by a process as claimed in one of the preceding claims.

10. The filtering porous structure as claimed in claim 9, the central part of which comprises a honeycomb filtering element or a plurality of honeycomb filtering elements joined together by a joint cement, said element or elements comprising a set of adjacent ducts or channels with axes parallel to one another separated by porous walls, said ducts being stopped by plugs at one or other of their ends to delimit inlet chambers opening onto a gas intake face and outlet chambers opening onto a gas discharge face, in such a way that the gas passes through the porous walls.

11. A catalytic filter or support obtained from a structure as claimed in either of claims 9 and 10 by deposition, preferably by impregnation, of at least one active catalytic phase typically comprising at least one precious metal such as Pt and/or Rh and/or Pd and optionally an oxide such as $CeO_2$, $ZrO_2$, $CeO_2/ZrO_2$.

12. The use of a catalytic support as claimed in claim 11, in an exhaust line of a diesel or petrol engine.

13. The use of a catalytic filter as claimed in claim 11, as a particulate filter in an exhaust line of a diesel or petrol engine.

**Patentansprüche**

1. Verfahren zur Herstellung einer Struktur aus einem porösen keramischen Werkstoff, der mindestens 95% Siliciumcarbid SiC umfasst, das die folgenden Schritte umfasst:

- Mischen verschiedener Fraktionen von SiC-Körnern, wobei die Mischung mindestens Folgendes umfasst:

■ eine erste Fraktion von $\alpha$-SiC-Körnern, deren mittlerer Durchmesser kleiner als 5 Mikrometer ist, die zwischen 15 und 50 Gewichtsprozent der Mischung aus SiC-Körnern darstellt,
■ eine zweite Fraktion von $\alpha$-SiC-Körnern, deren mittlerer Durchmesser mindestens zwei Mal größer ist als derjenige der ersten Fraktion von $\alpha$-SiC-Körnern und deren mittlerer Durchmesser größer oder gleich 5 Mikrometer ist, die zwischen 30 und 80 Gewichtsprozent der Mischung aus SiC-Körnern darstellt,
■ eine Fraktion von $\beta$-SiC-Körnern oder von mindestens einem Vorprodukt von $\beta$-SiC-Körnern, die zwischen 5 und 40 Gewichtsprozent der Mischung aus SiC-Körnern darstellt,

- Fonngebung der Filterstruktur, zum Beispiel durch Extrudieren, nach dem Kneten der Mischung in einer Flüssigkeit, wie beispielsweise Wasser,

- Trocknen, zum Beispiel durch Erwärmung oder unter der Einwirkung von Mikrowellen,
- Brennen der geformten porösen Struktur in einer nicht oxidierenden Atmosphäre bei einer Temperatur, die zwischen etwa 1450 °C und etwa 2300 °C liegt.

2. Verfahren nach Anspruch 1, wobei der mittlere Durchmesser der Körner der ersten Fraktion von $\alpha$-SiC-Körnern kleiner als etwa 1 Mikrometer, vorzugsweise kleiner als 0,8 Mikrometer ist.

3. Verfahren nach Anspruch 1 oder 2, wobei der mittlere Durchmesser der Körner der zweiten Fraktion von $\alpha$-SiC-Körnern zwischen etwa 10 und etwa 100 Mikrometern, vorzugsweise zwischen etwa 10 und etwa 20 Mikrometern, liegt.

4. Verfahren nach einem der vorhergehenden Ansprüche, wobei die Fraktion von $\beta$-SiC-Körnern einen mittleren Durchmesser aufweist, der mindestens gleich demjenigen der ersten Fraktion von $\alpha$-SiC-Körnern ist und vorzugsweise zwischen etwa 3 und etwa 30 Mikrometern liegt.

5. Verfahren nach einem der vorhergehenden Ansprüche, wobei die erste Fraktion von $\alpha$-SiC-Körnern zwischen 20 und 40 Gewichtsprozent der Mischung von SiC-Körnern darstellt.

6. Verfahren nach einem der vorhergehenden Ansprüche, wobei die zweite Fraktion von $\alpha$-SiC-Körnern zwischen 30 und 60 Gewichtsprozent der Mischung von SiC-Körnern darstellt.

7. Verfahren nach einem der vorhergehenden Ansprüche, wobei die Fraktion von $\beta$-SiC-Körnern zwischen 10 und 35 Gewichtsprozent der Mischung von SiC-Körnern darstellt.

8. Verfahren nach einem der vorhergehenden Ansprüche, wobei das Vorprodukt von $\beta$-SiC-Körnern in der Gruppe gewählt wird, die aus einem Siliciumpulver in Verbindung mit amorphem Kohlenstoff oder Graphitkohlenstoff, aus einem Siliciumalkoxid in Verbindung mit amorphem Kohlenstoff oder Graphitkohlenstoff oder einer metallorganischen Verbindung auf Basis von Silicium gebildet ist.

9. Poröse Struktur, die durch ein Verfahren nach einem der vorhergehenden Ansprüche hergestellt werden kann.

10. Poröse Filterstruktur nach Anspruch 9, deren mittlerer Abschnitt ein wabenförmiges Filterelement oder mehrere wabenförmige Filterelemente umfasst, die durch einen Fugenzement miteinander verbunden sind, wobei das oder die Elemente eine Anzahl von benachbarten Leitungen oder Kanälen mit zueinander parallel verlaufenden Achsen umfasst oder umfassen, die durch poröse Wände voneinander getrennt sind, wobei die Leitungen an einem ihrer Enden durch Verschlüsse verschlossen sind, um Eintrittskammern, die sich gemäß einer Einlassseite der Gase öffnen, und Austrittskammern, die sich gemäß einer Ablassseite der Gase öffnen, abzugrenzen, derart, dass das Gas die porösen Wände durchquert.

11. Katalytischer Filter oder Träger, der ausgehend von einer Struktur nach einem der Ansprüche 9 oder 10 durch Abscheidung, vorzugsweise durch Imprägnierung, mindestens einer aktiven katalytischen Phase hergestellt wird, die typischerweise mindestens ein Edelmetall, wie beispielsweise Pt und/oder Rh und/oder Pd, und gegebenenfalls ein Oxid, wie beispielsweise $CeO_2$, $ZrO_2$, $CeO_2$-$ZrO_2$, umfasst.

12. Verwendung eines katalytischen Trägers nach Anspruch 11 in einer Auspuffanlage eines Diesel- oder Benzimnotors.

13. Verwendung eines katalytischen Filters nach Anspruch 11 als Partikelfilter in einer Auspuffanlage eines Diesel- oder Benzinmotors.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 816065 A
- EP 1142619 A
- EP 1455923 A
- WO 2004090294 A
- WO 2004065088 A
- US 5866210 A
- EP 1403231 A
- EP 1541817 A
- EP 1070687 A